# EUROPÄISCHE PATENTSCHRIFT

(11) **EP 4 114 709 B1**
(45) Veröffentlichungstag und Bekanntmachung des Hinweises auf die Patenterteilung: **12.02.2025**
(21) Anmeldenummer: 21708982.0
(22) Anmeldetag: 01.03.2021
(51) Int. Cl.: B62D 1/181

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 05.03.2020 DE 102020105916
(43) Veröffentlichungstag der Anmeldung: 11.01.2023
(73) Patentinhaber: thyssenkrupp Presta AG, 9492 Eschen (LI); thyssenkrupp AG, 45143 Essen (DE)
(72) Erfinder: RIEDMANN, Patrick, 6850 Dornbirn (AT); WILLI, Andreas, 6923 Lauterach (AT)
(74) Vertreter: thyssenkrupp Intellectual Property GmbH
(86) Internationale Anmeldenummer: PCT/EP2021/054991
(87) Internationale Veröffentlichungsnummer: WO 2021/175758

(56) Entgegenhaltungen:
- CN-A- 109 861 171
- DE-A1- 102006 019 981
- DE-A1- 102015 216 326
- DE-A1- 102017 207 561
- DE-B4- 102015 216 326

## Beschreibung

### Stand der Technik

Die vorliegende Erfindung betrifft eine Lenksäule für ein Kraftfahrzeug, umfassend eine Trageinheit, eine eine Lenkspindel drehbar lagernde Stelleinheit, die an der Trageinheit verstellbar gehaltert ist, eine einen elektrischen Stellmotor aufweisende Verstelleinrichtung zum Bewegen der Stelleinheit relativ zu der Trageinheit, eine Steuerungseinrichtung zum Betreiben der Verstelleinrichtung, und eine Überwachungseinrichtung, die dazu eingerichtet ist, die Bewegung der Stelleinheit zu beeinflussen, wenn eine Störung detektiert wird. Des Weiteren betrifft die vorliegende Erfindung ein Verfahren zum Betreiben einer verstellbaren Lenksäule für ein Kraftfahrzeug.

Die Stelleinheit ist an der Trageinheit verstellbar gehaltert, das heißt, die Stelleinheit ist von der Trageinheit getragen bzw. an der Trageinheit angeordnet, und zwar relativ zu der Trageinheit verlagerbar bzw. verschiebbar bzw. bewegbar.

Lenksäulen für Kraftfahrzeuge weisen eine Lenkspindel auf, an deren in Fahrtrichtung hinteren, dem Fahrer zugewandten Ende ein Lenkrad zur Einbringung eines Lenkbefehls bzw. Lenkmoments durch den Fahrer angeordnet ist. Dieses Ende wird als lenkradseitiges Ende der Lenkspindel bezeichnet. Die Lenkspindel ist um ihre Längsachse in einer Manteleinheit, auch als Führungskasten oder Kastenschwinge bezeichnet, oder in einer in der Manteleinheit aufgenommenen Stelleinheit drehbar gelagert. Die Manteleinheit ist von einer Trageinheit getragen, die an der Fahrzeugkarosserie anbringbar ist. Somit ist auch die Lenkspindel von der Trageinheit getragen.

Die Lenkspindel ist zumindest in einer Verstellrichtung relativ zu der Trageinheit bewegbar bzw. verlagerbar bzw. verstellbar, wobei eine gesonderte Verstelleinrichtung je Verstellrichtung vorgesehen ist. Eine Längsverstellung der Lenkspindel kann dadurch verwirklicht werden, dass die Stelleinheit in der Manteleinheit in Richtung der Längsachse der Lenkspindel teleskopartig verschiebbar aufgenommen ist. Eine Höhenverstellung der Lenkspindel kann dadurch realisiert werden, dass die Stelleinheit oder die diese aufnehmende Manteleinheit verschwenkbar an der Trageinheit gelagert ist. Solche Lenksäulen werden als verstellbare Lenksäulen bezeichnet.

Die Verstellung der Lenksäule bzw. der durch die Lenksäule umfassten Lenkspindel in Längs- und Höhenverstellrichtung ermöglicht die Einstellung einer ergonomisch günstigen Lenkradposition relativ zur Fahrerposition in Betriebsstellung, auch als Fahr- oder Bedienposition bezeichnet, in der ein manueller Lenkeingriff bzw. Lenkbefehl erfolgen kann. Die Längs- und Höhenverstellung ist ferner wichtig für die Optimierung der Sicht des Fahrers auf die Anzeige-/Instrumententafel bzw. auf das Armaturenbrett des Fahrzeugs.

Aus dem Stand der Technik, beispielsweise DE 10 2017 207 561 A1, ist es bekannt, die Verstellung einer Lenksäule unter Verwendung von jeweils mindestens einem als elektrischen Stellmotor ausgebildeten Verstellantrieb vorzunehmen. Solche Lenksäulen werden als elektrisch verstellbare Lenksäulen bzw. EVLS bezeichnet. Durch die elektrische Verstellung der Lenksäulen erübrigt sich ihre manuelle bzw. händische Verstellung durch Muskelkraft zugunsten eines verbesserten Komforts für den Fahrer.

Aus der DE 10 2015 216 326 B4 ist eine ver- und entstaubare, elektrisch verstellbare Lenksäule bekannt, die einen besonders großen bzw. langen Verstellweg realisiert.

Es hat sich gezeigt, dass bei Lenksäulen mit einem großen bzw. langen Verstellweg die Ausfallrate von dem Verstellantrieb der Lenksäule zugeordneten Komponenten erhöht ist, wobei sich herausgestellt hat, dass regelmäßig eine starke Erwärmung hierfür die Ursache ist. Da bei einem Ausfall des Verstellantriebs keine Verstellung der Lenksäule mehr ermöglicht ist, kann ein Ausfall des Verstellantriebs dazu führen, dass mitunter die Sicherheit des Fahrzeugführers nicht mehr gewährleistet ist, da dieser beispielsweise das Lenkrad nicht mehr ausreichend sicher betätigen kann und/oder dieses im Crashfall derart ungünstig zu dem Fahrzeugführer positioniert ist, dass es zu einem erhöhten Verletzungsrisiko beim Aufprall des Fahrzeugführers auf das Lenkrad kommt.

Ein Verfahren zum Schutz eines Motors für eine verstellbare Lenksäule vor zu hohen Temperaturen ist aus der CN 109 861 171 A bekannt. Dabei ist ein Schaltkreis vorgesehen, welcher den Motor von der Versorgungsspannung trennt, wenn eine Temperatur überschritten wird. Zudem beschreibt die DE 10 2006 019 981 A1 ein Verfahren zur Steuerung einer einen Antriebsmotor aufweisenden Verstelleinrichtung eines Kraftfahrzeugs, wobei es sich bei der Verstelleinrichtung um eine Lenkradverstellung handeln kann. Dabei ist offenbart, dass eine Temperatur eines Feldeffekttransistors überwacht wird und eine Funktionseinschränkung erfolgt, wenn die erfasste Temperatur größer als ein Temperaturkontrollschwellwert ist.

Daher liegt der vorliegenden Erfindung die Aufgabe zugrunde, eine Lenksäule zur Verfügung zu stellen, deren Betrieb zuverlässig und sicher ist und die einen einfachen Aufbau hat.

### Darstellung der Erfindung

Die der vorliegenden Erfindung zugrundeliegende Aufgabe wird gelöst durch eine Lenksäule für ein Kraftfahrzeug mit den Merkmalen des Anspruchs 1 sowie durch ein Verfahren mit den Merkmalen des Anspruchs 3. Vorteilhafte Weiterbildungen ergeben sich aus den jeweiligen Unteransprüchen.

Es wird eine Lenksäule für ein Kraftfahrzeug vorgeschlagen, umfassend eine Trageinheit, eine eine Lenkspindel drehbar lagernde Stelleinheit, die an der Trageinheit verstellbar gehaltert ist, eine einen elektrischen Stellmotor aufweisende Verstelleinrichtung zum Bewegen der Stelleinheit relativ zu der Trageinheit, eine Steuerungseinrichtung zum Betreiben der Verstelleinrichtung, und eine Überwachungseinrichtung, die dazu eingerichtet ist, die Bewegung der Stelleinheit zu beeinflussen, wenn eine Störung detektiert wird.

Erfindungsgemäß ist die Störung durch Feststellen einer thermischen Überlastung bestimmt. Dabei handelt es sich um ein Feststellen einer thermischen Überlastung der Verstelleinrichtung und/oder der Steuerungseinrichtung.

Die erfindungsgemäße Lenksäule ist daher eine Lenksäule, deren Betrieb zuverlässig und sicher ist und die einen einfachen Aufbau hat. Insbesondere kommt die vorgeschlagene Lenksäule ohne eine Kühlung der thermisch beanspruchten Komponenten aus. Darüber hinaus entstehen vorteilhafterweise keine zusätzlichen Kosten durch die Verwendung von hitzeresistenteren Komponenten. Dank der erfindungsgemäßen Ausgestaltung der Lenksäule kann kostengünstig und zuverlässig ein irreversibler Schaden der Verstelleinrichtung und/oder der Steuerungseinrichtung wirksam vermieden werden, da die Bewegung, sprich die Verstellung der Stelleinheit, beeinflussbar ist, wenn eine thermische Überlastung festgestellt ist. Somit stellt diese Maßnahme einen wesentlichen Beitrag zur Erhöhung der Sicherheit des Fahrzeugführers dar.

Falls die Erwärmung des Verstellantriebs und/oder der Antriebskomponenten und/oder der Steuerungseinrichtung eine kritische Temperatur übersteigt, spricht man von thermischer Überlastung. Die kritische Temperatur ist als jene definiert, bei deren Überschreiten der Verstellantrieb und/oder der Antriebskomponenten und/oder der Steuerungseinrichtung einen irreversiblen Schaden nehmen kann, so dass deren Funktion zumindest teilweise beeinträchtigt ist.

Während des Betriebs des Verstellantriebs der Lenksäule, das heißt, während des Verstellens entlang des Verstellwegs kann es also aufgrund von Verlustleistungen, insbesondere aufgrund ohmscher Verluste und/oder aufgrund von Reibungsverlusten, zu einer Erwärmung des Verstellantriebs, insbesondere der Wicklungen des elektrischen Stellmotors, und/oder der dem Verstellantrieb zugeordneten Antriebskomponenten kommen. Es kann auch zu einer Erwärmung der Steuerungseinrichtung kommen. Bei besonders großen bzw. langen Verstellwegen und bei vielen Verstellzyklen in kurzer Zeit, wie diese beispielsweise in einem Missbrauchsfall auftreten können, ist die mögliche Betriebszeit des Verstellantriebs entsprechend lang und somit die mögliche thermische Beanspruchung des Verstellantriebs entsprechend groß.

Vorteilhafterweise wird dank der vorgeschlagenen Lenksäule dabei eine zu hohe thermische Beanspruchung der Lenksäule durch frühzeitiges Feststellen einer thermischen Überlastung und die Beeinflussung der Bewegung der Stelleinheit beim Feststellen der thermischen Überlastung verhindert. Eine Zerstörung und/oder Beschädigung von deren Bauteilen wird somit vorteilhafterweise verhindert. Ebenso wird vorteilhafterweise verhindert, dass der elektrische Stellmotor aufgrund einer hohen thermischen Beanspruchung durchbrennt und/oder in seiner Leistungsfähigkeit geschädigt werden. Auch wird vorteilhafterweise verhindert, dass Schmiermittelschichten von Komponenten durch zu hohe Temperaturen zerstört werden. Dies macht den Betrieb der Lenksäule vorteilhafterweise zuverlässig und sicher, insbesondere da die Ausfallwahrscheinlichkeit des Verstellantriebs aufgrund einer thermischen Überlastung vorteilhafterweise signifikant reduziert ist.

Da das Bereitstehen der Funktion der Verstelleinrichtung und/oder der Steuerungseinrichtung der Lenksäule somit weiter verbessert ist, ist die Sicherheit des Fahrzeugführers weiter erhöht, da dieser beispielsweise das Lenkrad weiterhin ausreichend sicher betätigen kann und/oder dieses im Crashfall derart günstig zu dem Fahrzeugführer positioniert werden kann, dass es zu einem verringerten Verletzungsrisiko bei einem möglichen Aufprall des Fahrzeugführers auf das Lenkrad kommt.

In einer vorteilhaften Weiterbildung kann die Überwachungseinrichtung als Temperaturschalter ausgebildet sein. Ein solcher Temperaturschalter weist bevorzugt zwei Schaltzustände auf, wobei in dem ersten Schaltzustand die Verstelleinrichtung und/oder die Steuerungseinrichtung von einer elektrischen Spannungsversorgung getrennt ist und in dem zweiten Schaltzustand die elektrische Spannungsversorgung ermöglicht ist, sprich die elektrische Leitung nicht unterbrochen ist. Mit anderen Worten wird im Fall einer Störung durch eine thermische Überlastung die elektrische Leitung, durch die eine Versorgerspannung zu der Steuereinheit und/oder zu der Verstelleinrichtung fließt, unterbrochen. Durch diese Unterbrechung wird ein weiteres Erwärmen und eine damit verbundene Temperatursteigerung wirksam verhindert, so dass ein dadurch auftretender Schaden verhindert wird, da eine thermische Überlastung vermieden wird. Der Temperaturschalter ist derart ausgelegt, dass dieser bei dem Erreichen einer ersten vorbestimmten kritischen Temperatur von dem zweiten Schaltzustand in den ersten Schaltzustand überführt wird. Nach einem Abfall der Temperatur unterhalb der zweiten vorbestimmten kritischen Temperatur erfolgt der Wechsel von dem ersten Schaltzustand in den zweiten Schaltzustand.

Bevorzugt ist der Wert der Temperatur, bei dem der Wechsel von dem zweiten Schaltzustand in den ersten Schaltzustand erfolgt, größer als der Wert der Temperatur, bei dem der Wechsel von dem ersten Schaltzustand in den zweiten Schaltzustand erfolgt. Das heißt dass der Wert der ersten vorbestimmten kritischen Temperatur größer ist als der Wert der zweiten vorbestimmten kritischen Temperatur. Beide Temperaturwerte werden bevorzugt in Testreihen während der Entwicklung ermittelt.

In einer vorteilhaften Weiterbildung kann es vorgesehen sein, dass die Überwachungseinrichtung in dem Verstellantrieb und/oder der Steuerungseinrichtung angeordnet ist.

Ein Thermoswitch ist dazu ausgebildet, eine Temperatur zu erfassen und in Abhängigkeit von der erfassten Temperatur, einen einer vor der Inbetriebnahme des Verstellantriebs festgelegten Zuweisung entsprechenden Schaltzustand einzunehmen. Ein solcher Schaltzustand kann die Erzeugung eines bestimmten Steuersignals umfassen, beispielsweise ein Steuersignal, das den Verstellantrieb und/oder die Steuerungseinrichtung vor Erreichen oder Überschreiten der ersten vorbestimmten kritischen Temperatur abschaltet. Der Thermoswitch kann als Thermistor, insbesondere PTC-Widerstand (Positive Temperature Coefficient Widerstand), auch als Kaltleiter bezeichnet, als thermische Abschaltung bzw. Thermosicherung oder Temperaturschalter, insbesondere Bimetallschalter, ausgebildet sein.

Die Trageinheit kann an einer Fahrzeugkarosserie anbringbar sein, wobei an der Trageinheit eine relativ zu der Trageinheit bewegbare Stelleinheit und somit Lenkspindel angeordnet ist. Die Verstelleinrichtung kann zum Bewegen der Stelleinheit und somit zum Bewegen der Lenkspindel relativ zu der Trageinheit dienen. Die Steuerungseinrichtung kann zum Ausgeben bzw. Aussenden von Steuerbefehlen dienen. Die Überwachungseinrichtung kann zur Temperaturüberwachung, das heißt, zum Erkennen eines Zustands thermischer Überlastung der Verstelleinrichtung und/oder der Steuerungseinrichtung dienen. Die Überwachungseinrichtung kann zum Erkennen eines Zustands hinreichender Abkühlung der Verstelleinrichtung und/oder der Steuerungseinrichtung dienen. Ein Zustand hinreichender Abkühlung ist einer der als Normalbetriebszustand bezeichneten Zustände. Ein Normalbetriebszustand ist ein Zustand, in dem die Temperatur unterhalb der zweiten vorbestimmten kritischen Temperatur liegt. Bevorzugterweise ist nur in einem Normalbetriebszustand eine Verstellung bzw. Bewegung der jeweiligen Verstelleinrichtung bei Nenngeschwindigkeit möglich. Die Steuerungseinrichtung kann derart ausgebildet sein, die Verstelleinrichtung und/oder die Steuerungseinrichtung zu deaktivieren, wenn die Überwachungseinrichtung einen Zustand thermischer Überlastung der Verstelleinrichtung und/oder der Steuerungseinrichtung erkennt. Die Steuerungseinrichtung kann auch derart ausgebildet sein, die Verstelleinrichtung und/oder die Steuerungseinrichtung zu aktivieren bzw. wieder zu starten, wenn die Überwachungseinrichtung einen Zustand hinreichender Abkühlung der Verstelleinrichtung und/oder der Steuerungseinrichtung erkennt. In einer vorteilhaften Weiterbildung kann es vorgesehen sein, dass die Steuerungseinrichtung die Überwachungseinrichtung umfasst.

Erfindungsgemäß ist in der Lenksäule eine Recheneinheit vorgesehen, das heißt, umfasst die Lenksäule eine Recheneinheit, wobei die Recheneinheit mit Hilfe eines dynamischen, thermischen Modells die thermische Überlastung bestimmt. Es handelt sich um die Bestimmung einer thermischen Überlastung der Verstelleinrichtung und/oder der Steuerungseinrichtung. Die Steuerungseinrichtung kann die Recheneinheit umfassen. Alternativ kann die Überwachungseinrichtung die Recheneinheit umfassen.

Das dynamische, thermische Modell ist in der Recheneinheit beispielsweise in Form von Lookup-Tabellen bzw. Umsetzungstabellen hinterlegbar, wobei die Tabellenwerte auf experimentelle Weise, das heißt, durch Vorversuche ermittelt werden können. Es ist denkbar, eine kritische Temperatur zu definieren, bei deren Überschreitung die Bewegung der Stelleinheit reduziert wird. Zusätzlich oder alternativ ist es denkbar, eine kritische Temperatur zu definieren, bei deren Überschreitung die Bewegung der Stelleinheit deaktiviert bzw. gestoppt wird. Auch ist es möglich, eine kritische Temperatur relativ zu einer festlegbaren Maximaltemperatur zu definieren. Beispielsweise ist es denkbar, eine weitere kritische Temperatur als jene Temperatur zu definieren, die 85 % der Maximaltemperatur beträgt, mit anderen Worten, 15 % unterhalb der Maximaltemperatur liegt. Des Weiteren ist es denkbar, eine kritische Temperatur zu definieren auf Grundlage der inneren Energie des interessierenden Systems, insbesondere der Verstelleinrichtung und/oder der Steuerungseinrichtung.

Durch die Hinterlegung eines die Verstelleinrichtung und/oder Steuerungseinrichtung abbildenden Modells kann bzw. können - je nach konkreter Formulierung des Modells - eine Temperatur bzw. mehrere Temperaturen der bzw. innerhalb der modellierten Verstelleinrichtung und/oder Steuerungseinrichtung berechnet werden. Das Modell berechnet die Temperaturen auf Grundlage von Werten von Sensoren, die in einer elektrisch verstellbaren Lenksäule ohnehin üblicherweise eingesetzt bzw. verbaut sind. Diese Sensorwerte bilden die Eingangsgrößen des Modells.

Dadurch, dass die zu überwachenden Temperaturen durch das Modell auf Grundlage von ohnehin üblicherweise in einer elektrisch verstellbaren Lenksäule erfassten Sensorwerten berechnet werden, erübrigt sich der Einsatz bzw. das Verbauen zusätzlicher Sensoren. Dies reduziert die Komplexität des Aufbaus der Lenksäule und die messtechnische Komplexität der Lenksäule.

So kann ein Zustand thermischer Überlastung der Verstelleinrichtung und/oder der Steuerungseinrichtung auf Basis eines dynamischen, thermischen Modells der zumindest einen Verstelleinrichtung und/oder der Steuerungseinrichtung erkannt werden. Bei dem dynamischen, thermischen Modell handelt sich um ein mathematisches Ersatzmodell der zumindest einen Verstelleinrichtung zur Berechnung der zu überwachenden Temperaturen der bzw. in der Verstelleinrichtung und/oder Steuerungseinrichtung. Jede der Verstelleinrichtungen oder Steuerungseinrichtung ist durch ein individuelles Modell mathematisch abgebildet. Das Modell ist skalierbar und erweiterbar, sodass die jeweils durch das Modell repräsentierte reale Verstelleinrichtung oder Steuerungseinrichtung grundsätzlich beliebig veränderbar ist. Außerdem ist das Modell grundsätzlich beliebig in seinem Detaillierungsgrad veränderbar, das heißt, es können - je nach Zielsetzung und erwünschtem bzw. vertretbarem Rechenaufwand - mehr oder weniger präzise Ersatzmodelle gebildet bzw. aufgestellt werden. Je mehr Modellvereinfachungen getroffen werden, desto unpräziser ist das Modell. Präzisere Modelle bilden die Realität besser ab, sind jedoch rechenaufwändiger. Umgekehrt gilt: Unpräzisere Modelle bilden die Realität weniger gut ab, sind hingegen recheneffizienter.

Auf diese Weise erübrigt sich der Einsatz eines sogenannten Thermoswitches bzw. Thermoschalters in der Lenksäule, um eine thermische Überlastung des Verstellantriebs und/oder der Antriebskomponenten und/oder der Steuerungseinrichtung abzuwenden, das heißt, erwärmungs- bzw. überhitzungsbedingtes Versagen des Verstellantriebs und/oder der Antriebskomponenten und/oder der Steuerungseinrichtung zu verhindern. Dies reduziert die Herstellungskosten, vereinfacht die strukturelle und messtechnische Komplexität, wodurch wiederum die Wahrscheinlichkeit von messtechnischen Fehlern reduziert wird, sodass die Zuverlässigkeit und Betriebssicherheit der Lenksäule erhöht wird.

Bevorzugterweise umfasst die Verstelleinrichtung eine Spindelmutter und eine darin eingreifende Gewindespindel, wobei die Spindelmutter und die Gewindespindel relativ zueinander drehbar sind und durch den Stellmotor der Verstelleinrichtung antreibbar sind. Die Spindelmutter weist ein Innengewinde auf. Die Gewindespindel weist ein Außengewinde auf und steht mit der Spindelmutter im Eingriff, sodass Spindelmutter und Gewindespindel wirkverbunden sind. Diese Antriebskomponenten sind von einem Verstellantrieb, im Konkreten von dem elektrischen Stellmotor antreibbar, das heißt, die Spindelmutter oder die Gewindespindel sind antreibbar.

Des Weiteren wird in erfindungsgemäßer Weise ein Verfahren vorgeschlagen zum Betreiben einer verstellbaren Lenksäule für ein Kraftfahrzeug, umfassend eine Trageinheit, eine eine Lenkspindel drehbar lagernde Stelleinheit, die an der Trageinheit verstellbar gehaltert ist, eine einen elektrischen Stellmotor aufweisende Verstelleinrichtung zum Bewegen der Stelleinheit relativ zu der Trageinheit, eine Steuerungseinrichtung zum Betreiben der Verstelleinrichtung, und eine Überwachungseinrichtung, die dazu eingerichtet ist, die Temperatur der Verstelleinrichtung und/oder der Steuerungseinrichtung zu überwachen und die Bewegung der Stelleinheit zu beeinflussen.

Das Verfahren umfasst die Schritte Ausgeben eines Befehls an die Steuerungseinrichtung zum Bewegen der Stelleinheit relativ zu der Trageinheit durch die Verstelleinrichtung; Detektieren eines thermischen Zustands der Verstelleinrichtung und/oder der Steuerungseinrichtung mit Hilfe der Überwachungseinrichtung; Ausgeben eines Befehls zur Reduzierung oder Deaktivierung der durch die Steuerungseinrichtung gesteuerten Bewegung der Stelleinheit, wenn der thermische Zustand ein Überlastzustand ist.

In dem ersten Verfahrensschritt wird ein Befehl zum Bewegen der Stelleinheit relativ zur Trageinheit durch die Verstelleinrichtung an die Steuerungseinrichtung ausgegeben. Dadurch wird die Stelleinheit und somit die Lenkspindel zur Einstellung einer Lenkradposition relativ zu der Trageinheit durch die Verstelleinrichtung bewegt, und zwar in Längs- und/oder Höhenverstellrichtung. Dazu kann es beispielsweise vorgesehen sein, dass der Fahrer über eine Schalteranordnung seine gewünschte Verstellung ein oder das Fahrzeug aufgrund eines Zustandswechsels wie beim Ein- und Aussteigen des Fahrers oder bei einem Umschalten in einem autonomen Fahrmodus.

In dem weiteren Verfahrensschritt wird ein thermischer Zustand der Verstelleinrichtung und/oder der Steuerungseinrichtung mit Hilfe der Überwachungseinrichtung detektiert bzw. erkannt. Während eines jeden Verstellvorgangs erwärmt sich gegebenenfalls die jeweils aktive Verstelleinrichtung und gegebenenfalls auch die Steuerungseinrichtung, beispielsweise durch ohmsche Verluste. Die Überwachungseinrichtung überwacht eine oder mehrere Temperaturen der Verstelleinrichtung und/oder Steuerungseinrichtung bzw. Temperaturen an einer Stelle oder an mehreren Stellen der Verstelleinrichtung und/oder Steuerungseinrichtung. Die Temperaturüberwachung durch die Überwachungseinrichtung kann während eines Verstellvorgangs bevorzugt auch nach einem Verstellvorgang, beispielsweise für eine vorbestimmte Zeit erfolgen.

In dem weiteren Verfahrensschritt wird ein Befehl zur Reduzierung oder Deaktivierung der durch die Steuerungseinrichtung gesteuerten Bewegung der Stelleinheit ausgegeben, nämlich in dem Fall, dass der detektierte thermische Zustand der Verstelleinrichtung und/oder der Steuerungseinrichtung ein Überlastzustand, das heißt, ein thermischer Überlastzustand, ist. Die Reduzierung der Bewegung, sprich die Verlangsamung der Verstellbewegung, kann durch Verringerung der der Verstelleinrichtung zugeführten Energie, das heißt, elektrische Stromstärke oder elektrische Spannung des Stellmotors, vollzogen werden. Die Deaktivierung der Bewegung kann durch Aus-/Abschaltung der betreffenden Verstelleinrichtung vollzogen werden. Nahezu unmittelbar nach der Deaktivierung der zumindest einen Verstelleinrichtung beginnt diese sich abzukühlen, insbesondere durch konvektive Wärmeübertragung unter Einfluss der kühleren Umgebungsluft. Dies wird auch als Abkühlphase bezeichnet.

In vorteilhafter Weise wird ein Zustand hinreichender Abkühlung der Verstelleinrichtung und/oder der Steuerungseinrichtung mit Hilfe der Überwachungseinrichtung detektiert bzw. erkannt, und zwar nachdem ein Befehl zur Reduzierung oder Deaktivierung der durch die Steuerungseinrichtung gesteuerten Bewegung der Stelleinheit ausgegeben worden ist. Der Zustand hinreichender Abkühlung ist auf verschiedene Weisen definierbar. Zum Beispiel ist der Zustand hinreichender Abkühlung als eingetreten definierbar, wenn eine festlegbare Abkühlzeit abgelaufen ist. Alternativ ist der Zustand hinreichender Abkühlung als eingetreten definierbar, wenn zumindest eine der Temperaturen unter einen festlegbaren Schwellwert im Sinne einer Abkühltemperatur abgesunken ist. Weiter alternativ ist der Zustand hinreichender Abkühlung als eingetreten definierbar, wenn eine festlegbare Abkühlzeit abgelaufen ist und zumindest eine der Temperaturen unter einen festlegbaren Schwellwert im Sinne einer Abkühltemperatur, der zweiten vorbestimmten kritischen Temperatur, abgesunken ist.

In einer vorteilhaften Weiterbildung kann es vorgesehen sein, dass die Überwachungseinrichtung eine Temperaturmesseinrichtung aufweist. Diese Temperaturmesseinrichtung ist derart eingerichtet, die Temperatur zur Messen, die zur Bestimmung des thermischen Zustands verwendet wird. Bevorzugt kann die Temperaturmesseinrichtung in der Steuerungseinrichtung und/oder in der Verstelleinrichtung angeordnet sein. Alternativ oder zusätzlich kann die Temperaturmesseinrichtung an einer Stelle außerhalb der Steuerungseinrichtung und/oder der Verstelleinrichtung angeordnet. Dies bietet den Vorteil, dass die Anordnung der Temperaturmesseinrichtung einfacher und kostengünstiger möglich ist. Dabei kann mittels vorangehenden Untersuchungen eine Korrelation zwischen der gemessenen Temperatur und einer Temperatur im Inneren der Steuerungseinrichtung und/oder der Verstelleinrichtung aufgestellt werden, so dass im Betrieb der Verstelleinrichtung durch die gemessene Temperatur ein Rückschluss auf die vorherrschende Temperatur im Inneren der Steuerungseinrichtung und/oder der Verstelleinrichtung geschlossen werden kann. Erreicht oder übersteigt die gemessene Temperatur einen vorher durch die Korrelation festgelegten Schwellwert, so herrscht im Inneren der Steuerungseinrichtung und/oder der Verstelleinrichtung eine kritische Temperatur und somit ein Überlastzustand. Daraufhin wird ein Befehl zur Reduzierung oder Deaktivierung der durch die Steuerungseinrichtung gesteuerten Bewegung der Stelleinheit ausgegeben.

Erfindungsgemäß erfolgt das Detektieren des thermischen Zustands mit Hilfe eines dynamischen, thermischen Modells. Und zwar handelt es sich dabei jeweils um dynamische, thermische Modelle der Verstelleinrichtung und/oder der Steuerungseinrichtung. Die Überwachungseinrichtung kann einen Zustand thermischer Überlastung der Verstelleinrichtung und/oder der Steuerungseinrichtung auf Basis eines jeweiligen dynamischen, thermischen Modells der Verstelleinrichtung und/oder der Steuerungseinrichtung detektieren bzw. erkennen, sobald eine Temperatur der Verstelleinrichtung und/oder der Steuerungseinrichtung einen festlegbaren Schwellwert, das heißt, eine kritische Temperatur, erreicht oder übersteigt. Dazu ist die Verstelleinrichtung und/oder die Steuerungseinrichtung - als reales Teilsystem der Lenksäule - im Vorfeld durch ein geeignetes dynamisches, thermisches Modell bzw. Ersatzmodell abzubilden. Im Allgemeinen sollte bei der Modellbildung darauf geachtet werden, einen ausgewogenen Kompromiss aus Präzision und Rechenintensität des Modells zu wählen. Ein hochpräzises Modell ist rechenintensiver als ein weniger präzises Modell. Dadurch, dass mit Hilfe eines dynamischen, thermischen Modells die Temperaturen überwacht werden, erübrigt sich der Einsatz zusätzlicher Sensoren. Dank des dynamischen, thermischen Modells können die Herstellungskosten weiter reduziert werden und gleichzeitig die Betriebssicherheit erhöht werden. Auf diese Weise ist die Komplexität des Aufbaus der Lenksäule und die messtechnische Komplexität der Lenksäule reduziert und die Zuverlässigkeit der Lenksäule erhöht.

In vorteilhafter Weise ist das dynamische, thermische Modell ein Netzwerkmodell konzentrierter Elemente bzw. ein Lumped Parameter Thermal Network (LPTN). Konzentrierte Elemente sind eine Idealisierung der realen Bauelemente zum Zweck der Modellvereinfachung. Dabei ist beispielsweise ein realer Leitungswiderstand als ein einziges, das heißt, konzentriertes Widerstandselement modelliert, wohingegen die das konzentrierte Widerstandselement verbindende Leitung als widerstandslos angenommen wird. Im Konkreten kann das dynamische, thermische Modell ein die dominanten, das heißt, die Verstelleinrichtung im Hinblick auf thermische Effekte dominierenden, Wärmeverluste als Wärmequellen berücksichtigendes Mehrkörpermodell sein. Die dominanten Wärmeverluste zeichnen sich dadurch aus, dass sie andere Wärmeverluste überlagern.

Das Modell kann in idealisierender Weise Kupferleitungswärmeverluste, Wicklungskörperwärmeverluste, Gehäusekörperwärmeverluste und/oder Umgebungskonvektionswärmeverluste umfassen. Die Parameter des Modells können auf empirisch ermittelten Werten basieren und mit entsprechenden Messungen validiert werden. In weiter vorteilhafter Weise ist das dynamische, thermische Modell derart ausgebildet, dass Wärmeübergangswiderstände und/oder Wärmekapazitäten berücksichtigt sind. Es ist auch denkbar, dass das dynamische, thermische Modell derart ausgebildet ist, dass ausschließlich Wärmeübergangswiderstände und/oder Wärmekapazitäten berücksichtigt sind, sodass darüberhinausgehende Effekte unberücksichtigt bleiben. Dabei handelt es sich um eine Modellvereinfachung, die einen besonders geeigneten Kompromiss aus Präzision und Rechenintensität des Modells darstellt.

Das dynamische, thermische Modell ist erfindungsgemäß derart ausgebildet, dass eine, insbesondere ausschließlich, über Gehäuseteile der Lenksäule und/oder der Verstelleinrichtung und/oder der Steuerungseinrichtung an die Umgebung erfolgende Wärmeabgabe berücksichtigt ist. Diese Modellvereinfachung beschränkt den Einfluss der Umgebungstemperatur auf die größten Bestandteile der Lenksäule oder der Verstelleinrichtung oder der Steuerungseinrichtung, die mit der Umgebungstemperatur thermisch wechselwirken, nämlich die jeweiligen Gehäuseteile. Diese Gehäuseteile stellen die dominierenden Wärmetauscher dar. Dies ist ein weiterer besonders geeigneter Kompromiss aus Präzision und Rechenintensität des Modells.

Weiter ist denkbar, dass die Verstelleinrichtung der verstellbaren Lenksäule eine Spindelmutter und eine darin eingreifende Gewindespindel umfasst, wobei die Spindelmutter und die Gewindespindel relativ zueinander drehbar sind und durch den Stellmotor der Verstelleinrichtung antreibbar sind.

Bevorzugterweise sind Eingangsgrößen bzw. ist eine Eingangsgröße des dynamischen, thermischen Modells die Betriebszeit des Stellmotors, die Betriebsspannung des Stellmotors, der Betriebsstrom des Stellmotors und/oder die Betriebsdrehzahl des Stellmotors. Die Betriebszeit des Stellmotors ist für jeden Verstellvorgang einzeln erfassbar, nämlich jeweils beginnend mit dem Anfangszeitpunkt einer Verstellbewegung und endend mit dem Beendigungszeitpunkt der Verstellbewegung. Die Betriebsspannung des Stellmotors ist durch einen Spannungsmesssensor bzw. Voltmeter erfassbar. Der Betriebsstrom des Stellmotors ist durch einen Strommesssensor bzw. Amperemeter erfassbar. Die Betriebsdrehzahl des Stellmotors ist durch einen Drehzahlmesssensor erfassbar oder kann durch die Steuerungseinheit bestimmt werden. Bei diesen als Eingangsgrößen für das Modell verwendbaren Sensorwerten handelt es sich um Werte von Sensoren, die bei einer elektrisch verstellbaren Lenksäule ohnehin üblicherweise eingesetzt bzw. verbaut sind. Denn ein Stellmotor ist für eine elektrisch verstellbare Lenksäule unentbehrlich und die Betriebsspannung des Stellmotors wird typischerweise zur Leistungsüberwachung beobachtet. Zusätzliche Sensoren zur Erfassung der vorgenannten Kenngrößen sind somit nicht erforderlich. So reduziert sich die Komplexität des Aufbaus der Lenksäule und die messtechnische Komplexität der Lenksäule.

Zusätzlich oder alternativ kann eine Eingangsgröße des dynamischen, thermischen Modells die Umgebungstemperatur sein. Die Umgebungstemperatur ist durch einen Temperaturfühler bzw. ein Thermometer erfassbar. Temperaturfühler zur Erfassung der Umgebungstemperatur sind bei einem Kraftfahrzeug mit einer elektrisch verstellbaren Lenksäule ohnehin üblicherweise eingesetzt bzw. verbaut, um beispielsweise dem Fahrer die Außentemperatur anzuzeigen. Zusätzliche Sensoren zur Erfassung der Umgebungstemperatur sind somit nicht erforderlich. So reduziert sich ebenfalls die Komplexität des Aufbaus der Lenksäule und die messtechnische Komplexität der Lenksäule.

Dies ermöglicht das sogenannte Derating, das heißt, eine an die Umgebungstemperatur angepasste Leistungsabgabe. Es handelt sich um eine von der Umgebungstemperatur abhängige Leistungsanpassung bzw. -reduzierung. Danach gilt ab einer festlegbaren, kritischen Umgebungstemperatur: Je höher die Umgebungstemperatur ist, desto geringer ist die Leistung bzw. Leistungsfähigkeit bzw. Leistungsabgabe des durch Derating überwachten elektrischen bzw. elektronischen Systems. Derating dient zum Überhitzungsschutz.

In einer vorteilhaften Weiterbildung kann es vorgesehen sein, dass in einem ersten Schritt bei der Detektierung des thermischen Überlastzustands durch die Überwachungseinrichtung ein Befehl zur Reduzierung durch die Steuerungseinrichtung gesteuerten Bewegung der Stelleinheit ausgegeben wird, wobei in einem zweiten Schritt, wenn nach einer vorbestimmten Zeit durch die Überwachungseinrichtung immer noch ein thermischer Überlastzustand detektiert wird, ein Befehl zur Deaktivierung der durch die Steuerungseinrichtung gesteuerten Bewegung der Stelleinheit ausgegeben wird. Mit anderen Worten wird zunächst durch eine Verlangsamung der Verstellung versucht, dass die Temperatur wieder absinkt, also eine Abkühlung stattfindet. Unterschreitet die ermittelte Temperatur eine vorbestimmte Grenztemperatur, die zweite vorbestimmte kritische Temperatur, die bevorzugt geringer ist als die erste vorbestimmte kritische Temperatur, kann die Verstellgeschwindigkeit wieder erhöht werden, sprich die Verstelleinrichtung wieder beschleunigt werden. Sollte jedoch die Temperatur nicht absinken, sondern oberhalb der kritischen Temperatur verharren, so erfolgt nach einer vorbestimmten Zeit oder bei einem Überschreiten einer zweiten kritischen Temperatur, die über der zuvor genannten kritischen Temperatur liegt, ein Deaktivieren der Verstelleinrichtung. Bevorzugt ist die zweite kritische Temperatur, bei der die Deaktivierung erfolgt, 10% höher als die erste kritische Temperatur. Bevorzugt ist die vorbestimmte Zeit kleiner gleich 10 Sekunden. Bevorzugt ist die vorbestimmte Zeit größer 1 Sekunde.

In einer weiteren, bevorzugten Ausführungsform ist ein weiterer Verfahrensschritt vorgesehen, nämlich das Ausgeben eines Befehls zur Aktivierung der durch die Steuerungseinrichtung gesteuerten Bewegung der Stelleinheit, wenn der thermische Zustand ein Normalbetriebszustand nach erfolgter Abkühlung ist. Der Normalbetriebszustand ist ein solcher Zustand, bei der die Temperatur der Verstelleinrichtung und/oder der Steuerungseinrichtung unterhalb einer bestimmten Grenztemperatur liegt. Diese Grenztemperatur, also die zweite vorbestimmte kritische Temperatur, ist bevorzugt geringer als die erste vorbestimmte kritische Temperatur, besonders bevorzugt ist diese zumindest 10%, besonders bevorzugt 25% geringer als die erste vorbestimmte kritische Temperatur. Die Steuerungseinrichtung gibt ein Befehl aus, der die zuvor reduzierte oder deaktivierte Bewegung der Stelleinheit wiederherstellt bzw. aktiviert, wenn die Überwachungseinrichtung einen Zustand hinreichender Abkühlung der Verstelleinrichtung und/oder Steuerungseinrichtung erkannt hat. Im Falle einer zuvor reduzierten Bewegung der Stelleinheit handelt es sich um eine Beschleunigung der Bewegung. Die Beschleunigung kann durch Erhöhung der der Verstelleinrichtung zugeführten Energie, das heißt, elektrische Stromstärke oder elektrische Spannung des Stellmotors, vollzogen werden. Im Falle einer zuvor deaktivierten Bewegung der Stelleinheit handelt es sich um eine Aktivierung bzw. Reaktivierung der Bewegung. Die Aktivierung bzw. Reaktivierung kann durch Ein/Anschaltung der betreffenden Verstelleinrichtung, das heißt, deren Stellmotor, vollzogen werden.

Sämtliche Merkmale, die voranstehend in Bezug auf einen der Vorrichtungsansprüche beschrieben sind, sind grundsätzlich analog auf einen der Verfahrensansprüche anwendbar. Des Weiteren sind sämtliche Merkmale, die voranstehend in Bezug auf einen der Verfahrensansprüche beschrieben sind, grundsätzlich analog auf einen der Vorrichtungsansprüche anwendbar.

### Beschreibung der Zeichnung

Eine vorteilhafte Ausführungsform der Erfindung ist im Folgenden anhand der Zeichnung näher erläutert. Darin zeigen
- Figur 1: eine Ausführungsform der erfindungsgemäßen Lenksäule in einer perspektivischen Darstellung,
- Figur 2: die Lenksäule aus Figur 1 in einer weiteren perspektivischen Darstellung,
- Figur 3: einen Teil der Lenksäule aus Figur 1 in einem Blockdiagramm,
- Figur 4: ein Beispiel eines Netzwerkmodells konzentrierter Elemente für die Lenksäule aus Figur 1.

### Ausführungsform der Erfindung

In den verschiedenen Figuren sind gleiche Teile stets mit den gleichen Bezugszeichen versehen und sind daher in der Regel jeweils nur einmal benannt bzw. erwähnt.

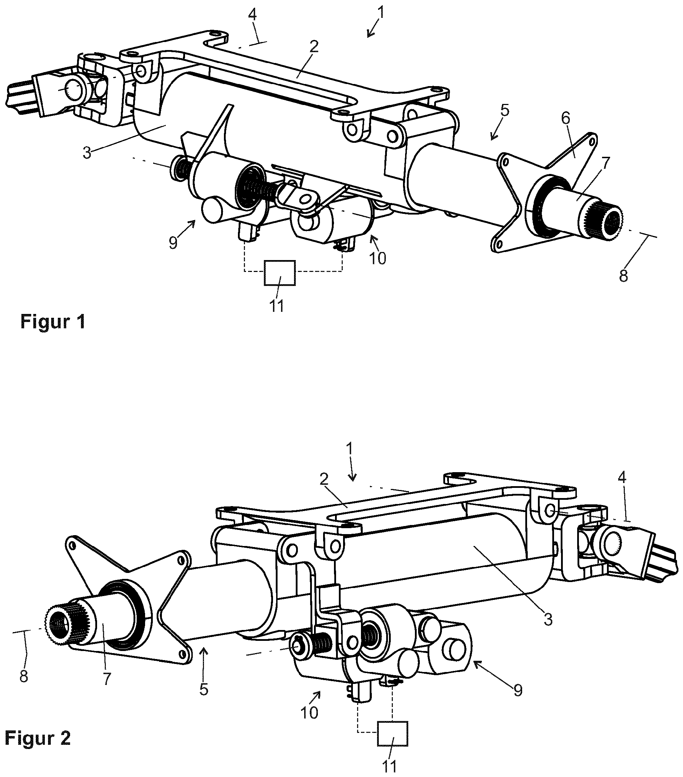

Figur 1 zeigt eine Ausführungsform der erfindungsgemäßen Lenksäule 1 in einer perspektivischen Darstellung von schräg hinten links in Fahrzeugfahrtrichtung.

Die Lenksäule 1 umfasst eine Trageinheit 2 und eine Manteleinheit 3. Die Manteleinheit 3 ist über eine Schwenkachse 4 mit der Trageinheit 2 verbunden. Die Lenksäule 1 ist über die Trageinheit 2 an einer in den Figuren nicht dargestellten Fahrzeugkarosserie eines Kraftfahrzeugs anbringbar. Die Trageinheit 2 dient zur verschwenkbaren Aufhängung der Manteleinheit 3 und der damit verbundenen Stelleinheit 5 an der Fahrzeugkarosserie.

Die Stelleinheit 5 ist in der Manteleinheit 3 aufgenommen. Die Stelleinheit 5 ist beweglich mit der Manteleinheit 3 verbunden, das heißt, die Stelleinheit 5 ist teleskopartig gegenüber der Manteleinheit 3 verlagerbar, indem sie in die Manteleinheit 3 einschiebbar und aus der Manteleinheit 3 herausziehbar ist, somit ist diese relativ zur Trageinheit 2 verstellbar. Die Stelleinheit 5 ist als Rohrkörper mit einem Flansch 6 an dem dem Fahrer zugewandten Ende, das heißt lenkradseitig, ausgebildet. Der Flansch 6 ist mit einem in den Figuren nicht dargestellten Lenkstockschaltermodul koppelbar. Der Rohrkörper der Stelleinheit 5 ist an dem dem Fahrer abgewandten Ende in der Manteleinheit 3 koaxial angeordnet, nämlich darin axial verschiebbar gelagert.

Die Stelleinheit 5 umfasst eine Lenkspindel 7. Somit umfasst die Lenksäule 1 die Lenkspindel 7. Die Längsachse der Lenkspindel 7 definiert eine Lenkspindelachse 8. Die Lenkspindel 7 ist drehbar in der Stelleinheit 5 gelagert. Somit ist die Lenkspindel 7 auch drehbar in der Manteleinheit 3 gelagert. Denn die Stelleinheit 5 ist in der Manteleinheit 3 aufgenommen. Mit anderen Worten: Die Lenkspindel 7 ist unter Zwischenschaltung der Stelleinheit 5 in der Manteleinheit 3 gelagert. Es ist ebenfalls denkbar und möglich, dass die Lenkspindel 7 direkt in der Manteleinheit 3 gelagert ist.

Des Weiteren umfasst die Lenksäule 1 eine als Längsverstelleinrichtung 9 ausgebildete Verstelleinrichtung zum Bewegen der Lenkspindel 7 relativ zu der Trageinheit 2, nämlich zum translatorischen Bewegen der Stelleinheit 5 und somit der Lenkspindel 7 entlang der Lenkspindelachse 8 relativ zu der Trageinheit 2 und relativ zur Manteleinheit 3. Die Längsverstelleinrichtung 9 dient somit zur Längsverstellung der Stelleinheit 5 und der darin gelagerten Lenkspindel 7.

Weiterhin umfasst die Lenksäule 1 eine als Höhenverstelleinrichtung 10 ausgebildete Verstelleinrichtung zum Verschwenken der Manteleinheit 3 gemeinsam mit der Stelleinheit 5 und somit der Lenkspindel 7 um die Schwenkachse 4 relativ zur Trageinheit 2. Die Höhenverstelleinrichtung 10 dient zur Höhenverstellung der Lenkspindel 7.

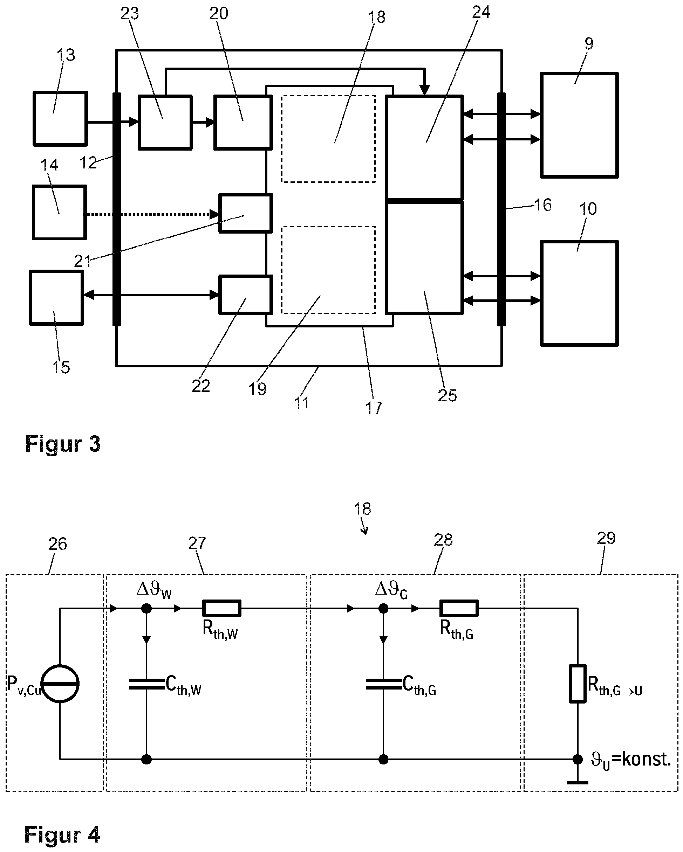

Die Lenksäule 1 umfasst darüber hinaus eine als eine Electronic Control Unit (ECU) ausgebildete Steuerungseinrichtung 11 zum Betreiben beider Verstelleinrichtungen 9, 10. Die Steuerungseinrichtung 11 umfasst eine in den Figuren nicht dargestellte Überwachungseinrichtung, die wiederum eine Recheneinheit 17 (s. Figur 3) umfasst. Die Überwachungseinrichtung ist dazu eingerichtet, die Temperatur der Verstelleinrichtungen 9, 10 zu überwachen und die Bewegung der Stelleinheit 5 zu beeinflussen, wenn sie eine Störung, nämlich eine Überhitzung bzw. einen Zustand thermischer Überlastung einer der Verstelleinrichtungen 9, 10 detektiert. Die Überwachungseinrichtung ist zudem dazu eingerichtet, einen Zustand hinreichender Abkühlung sowohl der Längsverstelleinrichtung 9 als auch der Höhenverstelleinrichtung 10 zu erkennen. Falls, nachdem die Bewegung der Stelleinheit 5 reduziert oder deaktiviert worden ist, ein Zustand hinreichender Abkühlung der in ihrer Bewegung reduzierten oder deaktivierten Verstelleinrichtung 9, 10 erkannt wird, wird ein Befehl zur Aktivierung der durch die Steuerungseinrichtung 11 gesteuerten Bewegung der Stelleinheit 5 ausgegeben.

Figur 2 zeigt die Lenksäule 1 aus Figur 1 in einer weiteren perspektivischen Darstellung von schräg hinten rechts in Fahrzeugfahrtrichtung.

Figur 3 zeigt einen Teil der Lenksäule 1 aus Figur 1 in Form eines Blockdiagramms.

Die Steuerungseinrichtung 11 ist über eine erste elektrische Schnittstelle 12 jeweils mit einer Strom-/Spannungsquelle 13, einer Benutzer-/Fahrereingabe 14 und einem Bussystem 15 verbunden. Außerdem ist die Steuerungseinrichtung 11 über eine zweite elektrische Schnittstelle 16 jeweils mit der Längsverstelleinrichtung 9 und der Höhenverstelleinrichtung 10 verbunden.

Die Recheneinheit 17 ist als eine Mikrocontroller Unit (MCU) ausgebildet. In der Recheneinheit 17 sind die Längsverstelleinrichtung 9 und die Höhenverstelleinrichtung 10 jeweils als ein gesondertes mathematisches Ersatzmodell hinterlegt, nämlich als ein Längsverstelleinrichtungsmodell 18 und ein Höhenverstelleinrichtungsmodell 19. Die Steuerungseinrichtung 11 ist derart ausgebildet, einen Zustand thermischer Überlastung der Längsverstelleinrichtung 9 auf Basis des Längsverstelleinrichtungsmodells 18 zu erkennen. Das Längsverstelleinrichtungsmodell 18 ist ein dynamisches, thermisches Modell der Längsverstelleinrichtung 9. Entsprechenderweise ist die Steuerungseinrichtung 11 ferner derart ausgebildet, einen Zustand thermischer Überlastung der Höhenverstelleinrichtung 10 auf Basis des Höhenverstelleinrichtungsmodells 19 zu erkennen. Das Höhenverstelleinrichtungsmodell 19 ist ein dynamisches, thermisches Modell der Höhenverstelleinrichtung 10.

Die Steuerungseinrichtung 11 umfasst einen Strom-/Spannungsanschluss 20, eine Benutzer-/Fahrereingabeschnittstelle 21 und eine Bussystemschnittstelle 22, die jeweils der Recheneinheit 17 zugeordnet sind.

Über den Strom-/Spannungsanschluss 20 ist die Recheneinheit 17 an die Strom-/Spannungsquelle 13 angeschlossen. Auf diese Weise ist die Recheneinheit 17 mit elektrischer Energie versorgbar. Bei der Stromversorgung der Recheneinheit 17 kann es, beispielsweise strom-/spannungsnetzbedingt, zu unerwünschten elektrischen oder elektromagnetischen Effekten kommen, insbesondere zu elektromagnetischen Interferenzen, die die ordnungsgemäße Funktion der Recheneinheit 17 und damit der Steuerungseinrichtung 11 stören. Zur Entstörung der Steuerungseinrichtung 11 bzw. zur Unterdrückung solcher Störeinflüsse auf die Steuerungseinrichtung 11 ist ein Entstörungsfilter 23 vorgesehen, das dem Strom-/Spannungsanschluss 20 vorgeschaltet ist. Das Entstörungsfilter 23 umfasst ein LC-Tiefpassfilter und einen Verpolungsschutz bzw. Reverse Polarity Protection.

Über die Benutzer-/Fahrereingabeschnittstelle 21 ist die Recheneinheit 17 an die Benutzer-/Fahrereingabe 14 angeschlossen. Die Benutzer-/Fahrereingabe 14 dient dem Benutzer bzw. dem Fahrer des Kraftfahrzeugs dazu, eine Eingabe betreffend die Längs- und/oder Höhenverstellung der Lenksäule 1 zu tätigen. Mit anderen Worten: Durch die Benutzer-/Fahrereingabe 14 kann der Benutzer bzw. Fahrer die Längs- und/oder Höhenposition der Lenkspindel 7 verstellen.

Außerdem ist die Recheneinheit 17 über die Bussystemschnittstelle 22 an das Bussystem 15, beispielsweise ein Local Interconnect Network (LIN) oder ein Controller Area Network (CAN), angeschlossen. Das Bussystem 15 ist ein Kommunikationssystem und dient zur Vernetzung von Teilsystemen, beispielsweise Sensoren und Aktoren, in Bezug auf einen gegenseitigen Informationsaustausch, insbesondere Austausch von Sensorwerten und Steuersignalen.

Die Steuerungseinrichtung 11 umfasst ferner einen Längsverstelleinrichtungstreiber 24 und einen Höhenverstelleinrichtungstreiber 25, die jeweils der Recheneinheit 17 zugeordnet sind. Die Verstelleinrichtungstreiber 24, 25 dienen jeweils als Kommunikationsschnittstelle zwischen dem jeweiligen Verstelleinrichtungsmodell 18, 19 und der jeweiligen Verstelleinrichtung 9, 10. Die Entstörung der Steuerungseinrichtung 11 ist angedeutet durch einen Pfeil von dem Entstörungsfilter 23 hin zu den Verstelleinrichtungstreibern 24, 25.

Figur 4 zeigt ein Beispiel eines Netzwerkmodells konzentrierter Elemente in einer Darstellung als Schaltplan, und zwar das Längsverstelleinrichtungsmodell 18 der Lenksäule 1 aus Figur 1. Das Höhenverstelleinrichtungsmodell 19 kann in analoger Weise aufgebaut bzw. formuliert sein.

Der besseren Übersicht halber sind die konzentrierten Elemente jeweils im Hinblick auf ihre realen Entsprechungen zusammengefasst, und zwar jeweils dargestellt durch gestrichelte Rechtecke. So umfasst das Längsverstelleinrichtungsmodell 18 in idealisierender Weise Kupferleitungswärmeverluste 26, Wicklungskörperwärmeverluste 27, Gehäusekörperwärmeverluste 28 und Umgebungskonvektionswärmeverluste 29. Die Vernachlässigung anderer Wärmeverluste vereinfacht das Längsverstelleinrichtungsmodell 18 auf die wesentlichen Effekte. Somit ist das Längsverstelleinrichtungsmodell 18 ein besonders geeignetes Modell im Hinblick auf eine Ausgewogenheit zwischen Präzision und Rechenintensität des Modells. Jedoch ist es ebenfalls denkbar und möglich, weitere Wärmeverluste zu berücksichtigen oder ein oder mehrere der genannten Verluste nicht zu berücksichtigen.

Die Kupferleitungswärmeverluste 26 sind als eine Stromquelle P_{v,Cu} dargestellt. Die Wicklungskörperwärmeverluste 27 sind als eine thermische Kapazität C_{th,W} mit einem thermischen Widerstand R_{th,W} dargestellt, wobei eine Wicklungstemperaturdifferenz Δϑ_{W} definiert ist. In analoger Weise sind die Gehäusekörperwärmeverluste 28 als eine thermische Kapazität C_{th,G} mit einem thermischen Widerstand R_{th,G} dargestellt, wobei eine Gehäusetemperaturdifferenz Δϑ_{G} definiert ist. Die Umgebungskonvektionswärmeverluste 29 sind als ein thermischer Widerstand R_{th,G→U} dargestellt, wobei die Umgebungstemperatur ϑ_{U} als konstant angenommen ist.

### Bezugszeichenliste

- 1: Lenksäule
- 2: Trageinheit
- 3: Manteleinheit
- 4: Schwenkachse
- 5: Stelleinheit
- 6: Flansch
- 7: Lenkspindel
- 8: Lenkspindelachse
- 9: Längsverstelleinrichtung
- 10: Höhenverstelleinrichtung
- 11: Steuerungseinrichtung
- 12: Erste elektrische Schnittstelle
- 13: Strom-/Spannungsquelle
- 14: Benutzer-/Fahrereingabe
- 15: Bussystem
- 16: Zweite elektrische Schnittstelle
- 17: Recheneinheit
- 18: Längsverstelleinrichtungsmodell
- 19: Höhenverstelleinrichtungsmodell
- 20: Strom-/Spannungsanschluss
- 21: Benutzer-/Fahrereingabeschnittstelle
- 22: Bussystemschnittstelle
- 23: Entstörungsfilter
- 24: Längsverstelleinrichtungstreiber
- 25: Höhenverstelleinrichtungstreiber
- 26: Kupferleitungswärmeverluste
- 27: Wicklungskörperwärmeverluste
- 28: Gehäusekörperwärmeverluste
- 29: Umgebungskonvektionswärmeverluste

## Patentansprüche

1. Lenksäule (1) für ein Kraftfahrzeug, umfassend eine Trageinheit (2), eine eine Lenkspindel (7) drehbar lagernde Stelleinheit (5), die an der Trageinheit (2) verstellbar gehaltert ist, eine einen elektrischen Stellmotor aufweisende Verstelleinrichtung (9, 10) zum Bewegen der Stelleinheit (5) relativ zu der Trageinheit (2), eine Steuerungseinrichtung (11) zum Betreiben der Verstelleinrichtung (9, 10), und eine Überwachungseinrichtung, die dazu eingerichtet ist, die Bewegung der Stelleinheit (5) zu beeinflussen, wenn eine Störung detektiert wird, **dadurch gekennzeichnet, dass** die Störung durch Feststellen einer thermischen Überlastung bestimmt ist, wobei eine Recheneinheit (17) vorgesehen ist, die mit Hilfe eines dynamischen, thermischen Modells (18, 19) die thermische Überlastung bestimmt, wobei das dynamische, thermische Modell (18, 19) derart ausgebildet ist, dass eine über Gehäuseteile der Lenksäule (1) und/oder der Verstelleinrichtung (9, 10) an die Umgebung erfolgende Wärmeabgabe berücksichtigt ist.

2. Lenksäule (1) nach Anspruch 1, **dadurch gekennzeichnet, dass** die Verstelleinrichtung (9, 10) eine Spindelmutter und eine darin eingreifende Gewindespindel umfasst, wobei die Spindelmutter und die Gewindespindel relativ zueinander drehbar sind und durch den Stellmotor der Verstelleinrichtung (9,10) antreibbar sind.

3. Verfahren zum Betreiben einer verstellbaren Lenksäule (1) für ein Kraftfahrzeug, umfassend eine Trageinheit (2), eine eine Lenkspindel (7) drehbar lagernde Stelleinheit (5), die an der Trageinheit (2) verstellbar gehaltert ist, eine einen elektrischen Stellmotor aufweisende Verstelleinrichtung (9, 10) zum Bewegen der Stelleinheit (5) relativ zu der Trageinheit (2), eine Steuerungseinrichtung (11) zum Betreiben der Verstelleinrichtung (9, 10), und eine Überwachungseinrichtung, die dazu eingerichtet ist, die Temperatur der Verstelleinrichtung (9, 10) und/oder der Steuerungseinrichtung (11) zu überwachen und die Bewegung der Stelleinheit (5) zu beeinflussen, umfassend folgende Schritte:
- Ausgeben eines Befehls an die Steuerungseinrichtung (11) zum Bewegen der Stelleinheit (5) relativ zu der Trageinheit (2) durch die Verstelleinrichtung (9, 10);
- Detektieren eines thermischen Zustands der Verstelleinrichtung (9, 10) und/oder der Steuerungseinrichtung (11) mit Hilfe der Überwachungseinrichtung;
wobei das Detektieren des thermischen Zustands mit Hilfe eines dynamischen, thermischen Modells (18, 19) erfolgt, und wobei das dynamische, thermische Modell (18, 19) derart ausgebildet ist, dass eine über Gehäuseteile der Lenksäule (1) und/oder der Verstelleinrichtung (9, 10) an die Umgebung erfolgende Wärmeabgabe berücksichtigt ist;
- Ausgeben eines Befehls zur Reduzierung oder Deaktivierung der durch die Steuerungseinrichtung (11) gesteuerten Bewegung der Stelleinheit (5), wenn der thermische Zustand ein Überlastzustand ist.

4. Verfahren nach Anspruch 3, **dadurch gekennzeichnet, dass** das dynamische, thermische Modell (18, 19) derart ausgebildet ist, dass Wärmeübergangswiderstände und/oder Wärmekapazitäten berücksichtigt sind.

5. Verfahren nach Anspruch 3 oder Anspruch 4, **dadurch gekennzeichnet, dass** die Verstelleinrichtung (9, 10) eine Spindelmutter und eine darin eingreifende Gewindespindel umfasst, wobei die Spindelmutter und die Gewindespindel relativ zueinander drehbar sind und durch den Stellmotor der Verstelleinrichtung (9) antreibbar sind.

6. Verfahren nach einem der Ansprüche 3 bis 5, **dadurch gekennzeichnet, dass** die Betriebszeit des Stellmotors und/oder die Betriebsspannung des Stellmotors und/oder der Betriebsstrom des Stellmotors und/oder die Betriebsdrehzahl des Stellmotors und/oder die Umgebungstemperatur eine Eingangsgröße des thermischen Modells (18, 19) ist.

7. Verfahren nach einem der Ansprüche 3 bis 6, **dadurch gekennzeichnet,** das folgender weiterer Schritt vorgesehen ist:
- Ausgeben eines Befehls zur Aktivierung der durch die Steuerungseinrichtung (11) gesteuerten Bewegung der Stelleinheit (5), wenn der thermische Zustand ein Normalbetriebszustand nach erfolgter Abkühlung ist.

## Claims

1. Steering column (1) for a motor vehicle, comprising a support unit (2), an adjustment unit (5) which rotatably supports a steering spindle (7) and is adjustably mounted on the support unit (2), an adjusting device (9, 10) for moving the adjustment unit (5) relative to the support unit (2), a control unit (11) for operating the adjusting device (9, 10), and a monitoring device which is set up to influence the movement of the adjustment unit (5), when a fault is detected, **characterized in that** the fault is determined by detecting a thermal overload, a computing unit (17) being provided which determines the thermal overload with the aid of a dynamic thermal model (18, 19), the dynamic thermal model (18, 19) being designed in such a way that heat dissipation to the environment via housing parts of the steering column (1) and/or the adjusting device (9, 10) is taken into account.

2. Steering column (1) according to claim 1, **characterized in that** the adjusting device (9, 10) comprises a spindle nut and a threaded spindle engaging therein, the spindle nut and the threaded spindle being rotatable relative to one another and being drivable by the servomotor of the adjusting device (9, 10).

3. Method for operating an adjustable steering column (1) for a motor vehicle, comprising a support unit (2), an adjustment unit (5) which rotatably supports a steering spindle (7) and is adjustably mounted on the support unit (2), an adjusting device (9, 10) having an electric servomotor for moving the adjustment unit (5) relative to the support unit (2), a control unit (11) for operating the adjusting device (9, 10), and a monitoring device which is set up to monitor the temperature of the adjusting device (9, 10) and/or the control unit (11) and to influence the movement of the adjustment unit (5), comprising the following steps:
- Output of a command to the control unit (11) for moving the adjustment unit (5) relative to the support unit (2) by the adjusting device (9, 10);
- Detection of a thermal state of the adjusting device (9, 10) and/or the control unit (11) with the aid of the monitoring device;
wherein the thermal state is detected with the aid of a dynamic thermal model (18, 19), and wherein the dynamic thermal model (18, 19) is designed in such a way that heat dissipation to the environment via housing parts of the steering column (1) and/or the adjusting device (9, 10) is taken into account;
- Issuing a command to reduce or deactivate the movement of the adjustment unit (5) controlled by the control unit (11) when the thermal state is an overload state.

4. Method according to claim 3, **characterized in that** the dynamic thermal model (18, 19) is designed in such a way that heat transfer resistances and/or heat capacities are taken into account.

5. Method according to claim 3 or claim 4, **characterized in that** the adjusting device (9, 10) comprises a spindle nut and a threaded spindle engaging therein, the spindle nut and the threaded spindle being rotatable relative to one another and being drivable by the servomotor of the adjusting device (9).

6. Method according to one of claims 3 to 5, **characterized in that** the operating time of the servomotor and/or the operating voltage of the servomotor and/or the operating current of the servomotor and/or the operating speed of the servomotor and/or the ambient temperature is an input variable of the thermal model (18, 19).

7. Method according to one of claims 3 to 6, **characterized in that** the following further step is provided:
- Issuing a command to activate the movement of the adjustment unit (5) controlled by the control device (11) when the thermal state is a normal operating state after cooling.

## Revendications

1. Colonne de direction (1) pour un véhicule automobile, comprenant une unité de support (2), une unité d'ajustement (5) supportant de manière rotative un arbre de direction (7), qui est maintenue de manière réglable sur l'unité de support (2), un dispositif de réglage (9, 10) pour déplacer l'unité d'ajustement (5) par rapport à l'unité de support (2), un unité de commande (11) pour faire fonctionner le dispositif de réglage (9, 10), et un dispositif de surveillance qui est conçu pour influencer le mouvement de l'unité d'ajustement (5), lorsqu'une perturbation est détectée, **caractérisé en ce que** la perturbation est déterminée par la constatation d'une surcharge thermique, une unité de calcul (17) étant prévue, qui détermine la surcharge thermique à l'aide d'un modèle thermique dynamique (18, 19), le modèle thermique dynamique (18, 19) étant conçu de telle sorte qu'il est tenu compte d'une émission de chaleur dans l'environnement par l'intermédiaire de parties du boîtier de la colonne de direction (1) et/ou du dispositif de réglage (9, 10).

2. Colonne de direction (1) selon la revendication 1, **caractérisée en ce que** le dispositif de réglage (9, 10) comprend un écrou de broche et une broche filetée qui s'y engage, l'écrou de broche et la broche filetée pouvant tourner l'un par rapport à l'autre et pouvant être entra nés par le servomoteur du dispositif de réglage (9, 10).

3. Procédé pour faire fonctionner une colonne de direction réglable (1) pour un véhicule automobile, comprenant une unité de support (2), une unité d'ajustement (5) supportant de manière rotative un arbre de direction (7), qui est maintenue de manière réglable sur l'unité de support (2), un dispositif de réglage (9, 10) présentant un servomoteur électrique pour déplacer l'unité d'ajustement (5) par rapport à l'unité de support (2), un unité de commande (11) pour faire fonctionner le dispositif de réglage (9, 10), et un dispositif de surveillance qui est conçu pour surveiller la température du dispositif de réglage (9, 10) et/ou du unité de commande (11) et pour influencer le mouvement de l'unité d'ajustement (5), comprenant les étapes suivantes
- émettre un ordre à l'unité de commande (11) pour déplacer l'unité d'ajustement (5) par rapport à l'unité de support (2) par le moyen de déplacement (9, 10) ;
- détecter un état thermique du dispositif de réglage (9, 10) et/ou de l'unité de commande (11) à l'aide du dispositif de surveillance ;
la détection de l'état thermique s'effectuant à l'aide d'un modèle thermique dynamique (18, 19), et le modèle thermique dynamique (18, 19) étant conçu de telle sorte qu'il est tenu compte d'une émission de chaleur dans l'environnement par l'intermédiaire de parties du boîtier de la colonne de direction (1) et/ou du dispositif de réglage (9, 10) ;
- émettre une commande pour réduire ou désactiver le mouvement de l'unité d'ajustement (5) commandé par l'unité de commande (11) lorsque l'état thermique est un état de surcharge.

4. Procédé selon la revendication 3, **caractérisé en ce que** le modèle thermique dynamique (18, 19) est conçu de telle sorte que des résistances de transfert de chaleur et/ou des capacités thermiques sont prises en compte.

5. Procédé selon la revendication 3 ou la revendication 4, **caractérisé en ce que** le dispositif de réglage (9, 10) comprend un écrou de broche et une broche filetée qui s'y engage, l'écrou de broche et la broche filetée pouvant tourner l'un par rapport à l'autre et pouvant être entraînés par le servomoteur du dispositif de réglage (9).

6. Procédé selon l'une des revendications 3 à 5, **caractérisé en ce que** le temps de fonctionnement du servomoteur et/ou la tension de fonctionnement du servomoteur et/ou le courant de fonctionnement du servomoteur et/ou la vitesse de fonctionnement du servomoteur et/ou la température ambiante est une grandeur d'entrée du modèle thermique (18, 19).

7. Procédé selon l'une des revendications 3 à 6, **caractérisé en ce que** l'on prévoit l'étape supplémentaire suivante :
- émettre une commande pour activer le mouvement de l'unité d'ajustement (5) commandé par l'unité de commande (11) lorsque l'état thermique est un état de fonctionnement normal après que le refroidissement a été effectué.
